# EUROPEAN PATENT APPLICATION

(11) **EP 4 379 093 A1**
(43) Date of publication of application: **05.06.2024**
(21) Application number: 22211016.5
(22) Date of filing: 02.12.2022
(51) Int. Cl.: C25B 1/04, C25B 9/67, F03D 9/19, F28D 1/00

(54) **OFFSHORE WIND TURBINE ARRANGEMENT AND METHOD FOR COOLING A HYDROGEN PRODUCTION APPARATUS OF AN OFFSHORE WIND TURBINE ARRANGEMENT**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

An offshore wind turbine arrangement (1), comprising
a wind turbine (2) for generating electrical energy by wind power,
a hydrogen production apparatus (12) for producing hydrogen gas (13) by means of the generated electrical energy, and
a cooling system (20) for cooling the hydrogen production apparatus (12),
wherein the cooling system (20) includes a subsea heat exchanger (21) for cooling a cooling liquid (22), and a pipe arrangement (23) forming a closed loop (25) for guiding the cooling liquid (22) from the subsea heat exchanger (21) to the hydrogen production apparatus (12) and back.

Having a closed loop cooling cycling and a subsea heat exchanger, an energy efficiency of the cooling system can be increased.

## Description

The present invention relates to an offshore wind turbine arrangement and a method for cooling a hydrogen production apparatus of an offshore wind turbine arrangement.

Hydrogen gas produced from renewable energies such as wind power provides a so-called green hydrogen that can replace fossil fuels. For example, green hydrogen gas can be used in fuel cell vehicles.

Hydrogen gas can be produced by converting water by means of electrolysis into hydrogen. The chemical process for converting water into hydrogen requires energy with can be provided by electrical energy generated by a generator of the wind turbine. Furthermore, due to an only moderate energy conversion efficiency of the production of hydrogen gas by electrolysis heat is generates during hydrogen production which needs to be dissipated. Thus, conventionally a hydrogen production apparatus is actively cooled.

It is one object of the present invention to provide an improved offshore wind turbine and an improved method for cooling a hydrogen production apparatus of an offshore wind turbine.

Accordingly, an offshore wind turbine arrangement is provided. The offshore wind turbine arrangement comprises
a wind turbine for generating electrical energy by wind power,
a hydrogen production apparatus for producing hydrogen gas by means of the generated electrical energy, and
a cooling system for cooling the hydrogen production apparatus,
wherein the cooling system includes a subsea heat exchanger for cooling a cooling liquid, and a pipe arrangement forming a closed loop for guiding the cooling liquid from the subsea heat exchanger to the hydrogen production apparatus and back.

Having a closed loop cooling cycling, an energy efficiency of the cooling system can be increased significantly compared to an open loop cooling cycling. In particular, in a known open loop cooling cycling, seawater is lifted up to the height where the hydrogen production apparatus and a conventional heat exchanger is located. The seawater is, for example, lifted up by means of a pump, e.g., a submersible seawater intake pump. After being used for cooling the hydrogen production apparatus, the seawater is injected back into the sea. With the proposed closed loop cooling cycling, the cooling liquid is circulating inside the one or more pipes of the pipe arrangement. In particular, cooling liquid flowing from the hydrogen production apparatus down to the subsea heat exchanger is releasing potential energy. Furthermore, the downflow of cooling liquid is pushing cooling liquid to flow through the subsea heat exchanger and from the subsea heat exchanger up to the hydrogen production apparatus. Hence, in contrast to an open loop cooling cycling, only frictional forces need to be overcome but no or only a neglectable amount of gravitational forces need to be overcome.

A further advantage of a closed loop cooling cycling is that any kind of cooling liquid can be used because the cooling liquid is not released into the seawater. For example, a cooling liquid can be used for which frictional forces between the cooling liquid and the inner walls of pipes of the pipe arrangement are small and/or minimal. Furthermore, a cooling liquid providing a more efficient heat transfer can be used. Moreover, a cooling liquid causing no or reduced fouling processes and/or corrosion effects can be used.

The subsea heat exchanger use seawater as a coolant. The natural convection of seawater flowing around pipes and/or fins of the subsea heat exchanger is used as driving source. Thus, no mechanical driving source is required which reduces power costs and further contributes to a more energy-efficient operation of the cooling system.

Further, having the subsea heat exchanger - instead of a heat exchanger arranged above sea level, e.g., on a tower platform - no space is required above sea level, e.g., on a tower platform. Thus, a tower platform can be configured smaller.

The offshore wind turbine arrangement comprises a wind turbine which is an apparatus to convert the wind's kinetic energy into electrical energy. The wind turbine comprises, for example, a rotor having one or more blades connected each to a hub, a nacelle including a generator, and a tower holding, at its top end, the nacelle. The tower of the wind turbine may be connected via a transition piece to a foundation of the wind turbine, such as a concrete foundation or a monopile in the seabed.

The wind turbine arrangement and the wind turbine are an offshore installations. Offshore includes marine environments as well as lakes and other open waters. The term "seawater" used herein includes water from marine environments as well as water from lakes and other open waters.

The hydrogen production apparatus is, in particular, configured for producing hydrogen gas by means of electrolysis. The hydrogen production apparatus is, in particular, configured for producing hydrogen gas by a chemical reaction in which water is separated into hydrogen and oxygen. The energy required for the chemical reaction / electrolysis process is supplied by electrical energy generated by the wind turbine.

The hydrogen production apparatus is, in particular, arrange above sea level, i.e. at a larger height than the subsea heat exchanger.

The hydrogen gas produced by the hydrogen production apparatus is, for example, used in a fuel cell and/or a fuel cell system such as a fuel cell vehicle or a fuel cell power system (stationary fuel cell used for the generation of electricity) .

A fuel cell is an electrochemical device that converts the chemical energy of a fuel (e.g., hydrogen gas) and an oxidant to electrical energy (DC power), heat or other reaction products.

The pipe arrangement of the cooling system includes, for example, one or more pipes forming the closed loop. The pipe arrangement is configured for guiding the cooled cooling liquid from the subsea heat exchanger to the hydrogen production apparatus and for guiding the to-be-cooled cooling liquid from the hydrogen production apparatus back to the heat exchanger.

According to an embodiment, the subsea heat exchanger and the hydrogen production apparatus each comprises an inlet and an outlet for the cooling liquid. Furthermore, the pipe arrangement forms the closed loop by fluidly connecting the outlet of the subsea heat exchanger and the inlet of the hydrogen production apparatus, and by fluidly connecting the outlet of the hydrogen production apparatus and the inlet of the subsea heat exchanger.

For example, the hydrogen production apparatus comprises a body and/or housing with a pipe portion arranged inside the body, the housing and/or a housing wall. Said pipe portion is configured for transporting a cooling liquid for cooling the body, the housing and/or an interior of the housing. Furthermore, said pipe portion comprises an inlet fluidly connected with the outlet of the heat exchanger and an outlet fluidly connected with the inlet of the heat exchanger.

According to a further embodiment, the subsea heat exchanger is arranged below sea level and/or on a seabed.

The subsea heat exchanger arranged on the seabed is, for example, supported by the seabed. The subsea heat exchanger arranged on the seabed may also be anchored to the seabed by means of one or more anchors.

The term "seabed" used herein includes a bed/floor of a marine environment, a lake and another open water.

According to a further embodiment, the subsea heat exchanger is arranged floatingly in the seawater and/or the subsea heat exchanger is anchored to the seabed by means of one or more anchors.

According to a further embodiment, the cooling system comprises one or more buoy attached to the subsea heat exchanger for indicating a location of the subsea heat exchanger and/or for lifting the subsea heat exchanger out of the seawater for maintenance.

The one or more buoy are, in particular, swimming on the water surface. The one or more buoy are, for example, connected to the subsea heat exchanger by one or more ropes, chains, cables or the like.

The subsea heat exchanger is, for example, lifted out of the seawater for maintenance of the subsea heat exchanger such as repairing or replacing the heat exchanger.

According to a further embodiment, the wind turbine comprises a tower and a platform arranged outside the tower, wherein the hydrogen production apparatus is arranged on the platform.

The platform is, in particular, arranged above sea level. The platform is, for example, arranged by 10 meters or more, 20 meters or more, 30 meters or more and/or 50 meters or more above sea level.

By having the closed loop cooling cycle of the cooling liquid, the cooling liquid is provided in an energy-efficient manner from the subsea heat exchanger to the hydrogen production apparatus arranged on the platform for cooling the hydrogen production apparatus. In particular, as compensating gravitational forces play only a minor role in the energy budget of the proposed closed loop cooling system, the hydrogen production apparatus can be arranged at a larger height without deteriorating the energy efficiency of the cooling system.

According to a further embodiment, the wind turbine comprises a tower and a nacelle arranged at the upper end of the tower, wherein the hydrogen production apparatus is arranged in the nacelle.

By having the closed loop cooling cycle, the cooling liquid is provided in an energy-efficient manner from the subsea heat exchanger even to a large height such as into the nacelle.

Hence, both the generator of the wind turbine and the hydrogen production apparatus are arranged in the nacelle in this embodiment.

Having the hydrogen production apparatus arranged together with the generator in the nacelle is of advantage as the electrical energy generated by the generator as DC current can be directly used for the electrolysis unit of the hydrogen production apparatus. In particular, DC current generated by the generator does not have to be converted to AC current for transporting the electrical energy to a hydrogen production apparatus located at the lower portion of the tower. Further, the transported AC current does not have to be converted back to DC current for supplying it to a hydrogen production apparatus.

According to a further embodiment,
the cooling system is configured for cooling one or more further heat producing units arranged in the nacelle, and/or
an outlet of the subsea heat exchanger is fluidly connected to an inlet of the one or more further heat producing units and an inlet of the subsea heat exchanger is fluidly connected to an outlet of the one or more further heat producing units, respectively.

The one or more further heat producing units arranged in the nacelle include, for example, a generator, a gearbox and/or a brake.

According to a further embodiment, the cooling system includes one or more pumps for pumping the cooling liquid through the closed loop of the pipe arrangement.

According to a further embodiment, the offshore wind turbine arrangement comprises a water supply system for supplying seawater to the hydrogen production apparatus for converting the seawater by means of electrical energy to hydrogen gas, the water supply system comprising a further pipe arrangement separate from the pipe arrangement of the cooling system.

In case of an offshore wind turbine arrangement in a marine environment which is surrounded by salted seawater, the water supply system may be configured for desalinated seawater and supplying desalinated seawater to the hydrogen production apparatus.

By having the water supply system comprising a further pipe arrangement separate from the pipe arrangement of the cooling system, the water used as agent in the chemical reaction of the electrolysis process does not mix with the cooling liquid used in the separate cooling cycle.

According to a further aspect, a method for cooling a hydrogen production apparatus of an offshore wind turbine arrangement is provided. The hydrogen production apparatus is configured for producing hydrogen gas by means of electrical energy generated by wind power, further, the method comprises the steps:
a) cooling a cooling liquid by a subsea heat exchanger, and
b) guiding the cooling liquid from the subsea heat exchanger to the hydrogen production apparatus and back through a closed loop formed by a pipe arrangement.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an offshore wind turbine arrangement with a hydrogen production apparatus and a cooling system for cooling the hydrogen production apparatus, according to an embodiment;
Fig. 2 shows a partial view of an offshore wind turbine arrangement according to a further embodiment;
Fig. 3 shows a partial view of an offshore wind turbine arrangement according to a further embodiment;
Fig. 4 shows an offshore wind turbine arrangement according to a further embodiment;
Fig. 5 shows a partial view of an offshore wind turbine arrangement according to a further embodiment; and
Fig. 6 shows a flowchart illustrating a method for cooling a hydrogen production apparatus of an offshore wind turbine arrangement.

In the Figures, like reference numerals designate like or functionally equivalent elements, unless otherwise indicated.

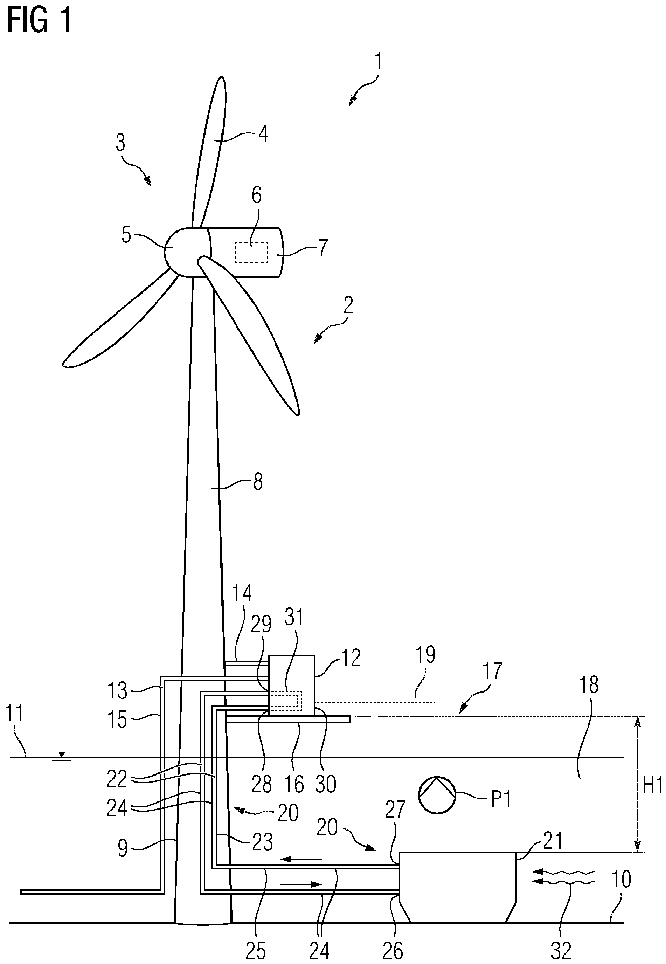

Fig. 1 shows a wind turbine arrangement 1 according to an embodiment. The wind turbine arrangement 1 is an offshore wind turbine arrangement comprising an offshore wind turbine 2. The wind turbine 2 comprises a rotor 3 having one or more blades 4 connected to a hub 5. The hub 5 is connected to a generator 6 arranged inside a nacelle 7. During operation of the wind turbine 2, the blades 4 are driven by wind to rotate and the wind's kinetic energy is converted into electrical energy by the generator 6 in the nacelle 7. The nacelle 7 is arranged at the upper end of a tower 8 of the wind turbine 2. The tower 8 is erected on a foundation 9 such as a monopile driven into a seabed 10. The reference sign 11 denotes a sea level.

The wind turbine arrangement 1 further comprises a hydrogen production apparatus 12 for producing hydrogen gas 13 by use of the electrical energy generated by the generator 6. The hydrogen production apparatus 12 includes, for example, an electrolysis unit for converting water into hydrogen and oxygen.

Furthermore, the wind turbine arrangement 1 comprises, for example, an electrical cable 14 for transporting electrical current generated by the generator 6 to the hydrogen production apparatus 12. The produced hydrogen gas 13 is, for example, transported from the hydrogen production apparatus 12 to another offshore or onshore installation (not shown) by a gas pipe 15.

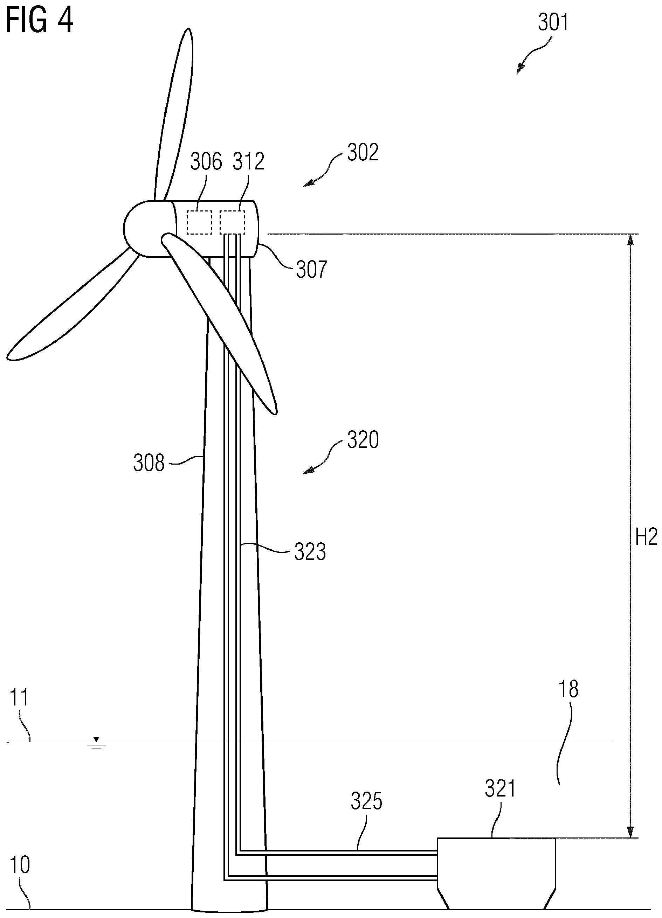

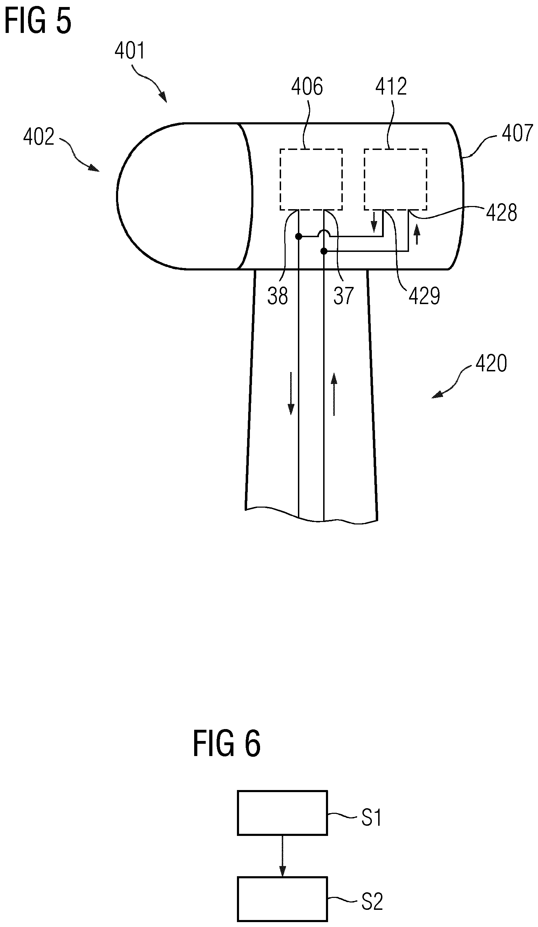

The hydrogen production apparatus 12 is, for example, arranged on an outside platform 16 of the wind turbine tower 8. Exemplarily, an outside platform 16 at about 10 or 20 meter above sea level 11 is shown in Fig. 1. However, in other embodiments, the hydrogen production apparatus 12 may also be arranged on another platform (not shown) of the wind turbine 2 situated in a different height above sea level 11 and/or in another location of the wind turbine 2 (e.g., in the nacelle 7, see Figs. 4 and 5).

Although not shown in the figures, the hydrogen production apparatus 12 may, for example, comprise said electrolysis unit, one or more gas compressors, a gas tank and the like.

As indicated in Fig. 1 with dashed lines, the offshore wind turbine arrangement 1 may optionally further comprise a water supply system 17 for supplying seawater 18 to the hydrogen production apparatus 12. The water supply system 17 comprises, for example, a submersible pump P1 for intake of seawater 18 and a pipe 19 for supplying the seawater 18 to the hydrogen production apparatus 12. The water supply system 17 is, for example, configured for desalinating the seawater 18. The (desalinated) seawater 18 is used by the hydrogen production apparatus 12 for converting water into hydrogen and oxygen by electrolysis.

A hydrogen production apparatus, such as the hydrogen production apparatus 12, is usually generating heat because of an only moderate energy efficiency. Therefore, it is required to actively cool the hydrogen production apparatus 12. To this end, the wind turbine arrangement 1 comprises a cooling system 20. The cooling system 20 includes a subsea heat exchanger 21 for cooling a cooling liquid 22. Further, the cooling system 20 includes a pipe arrangement 23 for guiding the cooling liquid 22 from the subsea heat exchanger 21 to the hydrogen production apparatus 12 and back. The pipe arrangement 23 comprises one or more pipes 24 forming a closed loop 25 for continuous cycling of the cooling liquid 22 withing the pipes 24 and between the subsea heat exchanger 21 and the hydrogen production apparatus 12.

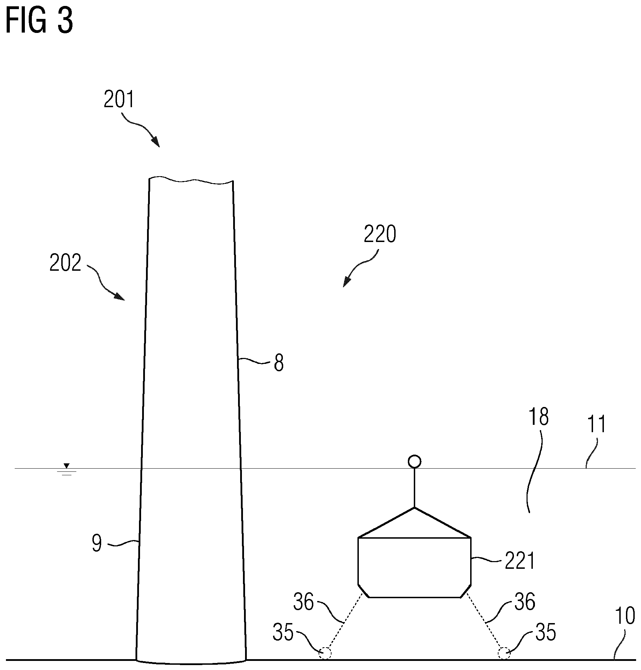

The subsea heat exchanger 21 is arranged below sea level 11. In the shown example of Fig. 1, the subsea heat exchanger 21 is arranged standing on the seabed 10. However, in other examples (e.g., Fig. 3) also other arrangements of the subsea heat exchanger 21 are possible.

The subsea heat exchanger 21 comprises an inlet 26 for the to-be-cooled cooling liquid 22 supplied from the hydrogen production apparatus 12. Further, the subsea heat exchanger 21 comprises an outlet 27 for the cooled cooling liquid 22 to supply it to the hydrogen production apparatus 12.

Moreover, the hydrogen production apparatus 12 comprises an inlet 28 for the cooling liquid 22 provided by the hydrogen production apparatus 12. Further, the hydrogen production apparatus 12 comprises an outlet 29 for guiding the cooling liquid 22 back to the hydrogen production apparatus 12. In particular, the pipe arrangement 23 forms the closed loop 25 by fluid connection of the outlet 27 of the subsea heat exchanger 21 and the inlet 28 of the hydrogen production apparatus 12, and by fluid connection of the outlet 29 of the hydrogen production apparatus 12 and the inlet 26 of the subsea heat exchanger 21.

For example, the hydrogen production apparatus 12 comprises a body 30 and/or housing 30 with a pipe portion 31 arranged inside the body 30 and/or housing 30. The pipe portion 31 is configured for transporting the cooling liquid 22 through the body 30, a wall of the housing 30 and/or an interior of the housing 30. Furthermore, the pipe portion 31 comprises the inlet 28 fluidly connected with the outlet 27 of the heat exchanger 21. The pipe portion 31 further comprises the outlet 29 fluidly connected with the inlet 26 of the heat exchanger 21.

The subsea heat exchanger 21 is surrounded by seawater 18. The natural convection 32 of the seawater 18 cools the cooling liquid 22 flowing through the subsea heat exchanger 21. Hence, as no mechanical driving source is required to move the seawater, power can be saved compared to a conventional heat exchanger arranged above sea level 11.

Further, having the closed loop 25 of the pipe arrangement 23, i.e. of the cooling liquid 22, the power consumption of the cooling system 20 can be further reduced. In particular, the energy required for lifting the cooling liquid 22 over the height H1 from the heat exchanger 21 to the hydrogen production apparatus 12 is provided to a large degree by potential energy released during the downstream of cooling liquid 22 from the hydrogen production apparatus 12 to the heat exchanger 21.

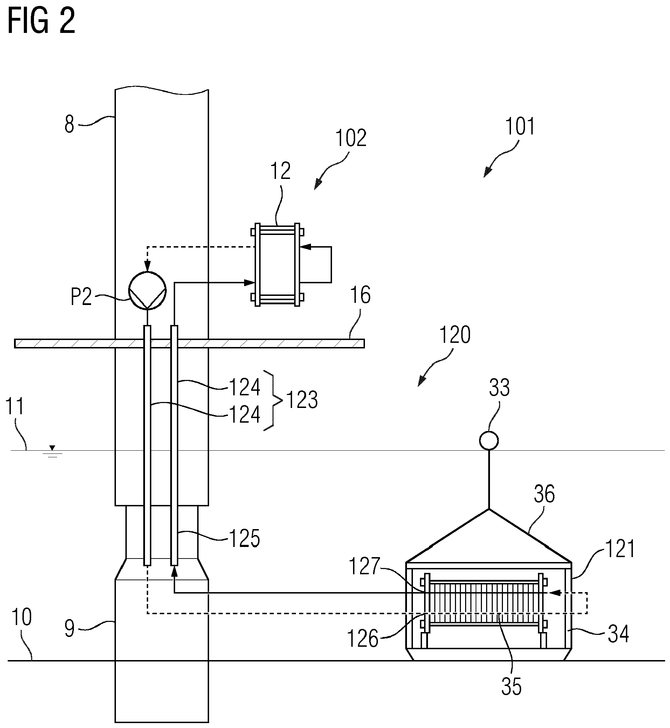

Fig. 2 shows a partial view of an offshore wind turbine arrangement 101 according to a further embodiment. In the following, only differences to the embodiment of Fig. 1 are described.

The wind turbine arrangement 101 comprises a cooling system 120 for cooling the hydrogen production apparatus 12. The cooling system 120 according to the embodiment of Fig. 2 comprises one or more pumps P2 for pumping the cooling liquid 22 through a closed loop 125 of a pipe arrangement 123 comprising one or more pipes 124. The pipe arrangement 123 is similar as the pipe arrangement 23 shown in Fig. 1.

The cooling system 120 comprises a subsea heat exchanger 121. The subsea heat exchanger 121 comprises a support structure 34, e.g., a steel structure. The subsea heat exchanger 121 may also comprise fins 35 or the like configured for better heat dissipation. Moreover, the subsea heat exchanger 121 comprises an inlet 126 and an outlet 127 for the cooling liquid 22, the inlet 126 and the outlet 127 being fluidly connected with the fins 35. Hence, the cooling liquid 22 is flowing from the inlet 126 to the fins 35, through the fins 35 and from the fins 35 to the outlet 127.

As exemplarily shown for the cooling system 120 with the subsea heat exchanger 121 in Fig. 2, any cooling systems described herein may optionally comprise one or more buoy 33 attached to the subsea heat exchanger 121. The one or more buoy 33 are swimming on the water surface 11. The one or more buoy 33 are used for indicating a location of the subsea heat exchanger 121. The one or more buoy 33 may also be used for lifting the subsea heat exchanger 121 out of the seawater 18 for maintenance of the subsea heat exchanger 121.

As shown in Fig. 2, the one or more buoy 33 are connected to the subsea heat exchanger 121, for example, by one or more ropes 36 or the like. The one or more buoy 33 are, for example, connected to the support structure 34 of the subsea heat exchanger 121 by the one or more ropes 36.

Fig. 3 shows a partial view of an offshore wind turbine arrangement 201 with a wind turbine 202 according to a further embodiment. In the embodiment of Fig. 3, a heat exchanger 221 of a cooling system 220 for cooling the hydrogen production apparatus 12 (Fig. 1) is arranged floatingly in the seawater 18. Optionally, the subsea heat exchanger 221 is anchored to the seabed 10 by means of one or more anchors 35. The one or more anchors 35 are connected to the subsea heat exchanger 221 by means of ropes, chains and/or cables 36. In particular, the one or more anchors 35 may, for example, be connected to a support structure (such as the support structure 34 in Fig. 2) of the subsea heat exchanger 221 by means of the ropes, chains and/or cables 36.

Apart from the floating arrangement of the heat exchanger 221, the other features of the offshore wind turbine arrangement 201 corresponds to the respective features of the offshore wind turbine arrangement 1 (Fig. 1) and/or the offshore wind turbine arrangement 101 (Fig. 2).

Fig. 4 shows a partial view of an offshore wind turbine arrangement 301 with a wind turbine 302 according to a further embodiment. In the embodiment of Fig. 4, a hydrogen production apparatus 312 is arranged inside a nacelle 307. Further, a cooling system 320 in the embodiment of Fig. 4 is configured for lifting the cooling liquid 22 from a subsea heat exchanger 321 to the nacelle 307. Depending on a height of a tower 308 of the wind turbine 302, the nacelle 307 can be situated more than 50 meter, more than 70 meter and/or more than 100 meter above the height of the heat exchanger 321. Hence, the cooling liquid 22 needs to be lifted over a large height H2. However, a closed loop 325 of a pipe arrangement 323 (similar as the closed loop 25 of the pipe arrangement 23 in Fig. 1) allows an energy-efficient supply of the cooled cooling liquid 22 even up to the nacelle 307.

Apart from the arrangement of the hydrogen production apparatus 312 in the nacelle 307, the other features of the offshore wind turbine arrangement 301 corresponds to the respective features of the offshore wind turbine arrangement 1 (Fig. 1), the offshore wind turbine arrangement 101 (Fig. 2) and/or the offshore wind turbine arrangement 201 (Fig. 3).

Fig. 5 shows a partial view of an offshore wind turbine arrangement 401 with a wind turbine 402 according to a further embodiment. In the embodiment of Fig. 5, a hydrogen production apparatus 412 is also arranged in the nacelle 407 similar as in the embodiment of Fig. 4.

In contrast to the embodiment of Fig. 4, a cooling system 420 of the offshore wind turbine arrangement 401 is configured for cooling one or more further heat producing units 406 arranged in the nacelle 407. In the example of Fig. 5, the cooling system 420 is used for cooling a generator 406 (similar as the generator 6 in Fig. 1) as an example of a further heat producing unit. In other examples the cooling system 420 may also be used to cool other heat producing equipment in the nacelle 407 such as a gear box, other components of a drive train of the wind turbine 402 or other electrical components.

As schematically shown in Fig. 5, an outlet of a subsea heat exchanger (such as the outlet 27 of the subsea heat exchanger 21 shown in Fig. 1) is fluidly connected to both a fluid inlet 37 of the generator 406 and a fluid inlet 428 of the hydrogen production apparatus 412. Furthermore, an inlet of the subsea heat exchanger (such as the inlet 26 of the heat exchanger 21 shown in Fig. 1) is fluidly connected to both a fluid outlet 38 of the generator 406 and an outlet 429 of the hydrogen production apparatus 412.

It is noted that the fluid inlets 37, 428 and fluid outlets 38, 429 are inlets and outlets, respectively, of a respective pipe portion (such as the pipe portion 31 shown in Fig. 1) or the like of the respective unit 406, 412.

In the following, a method for cooling a hydrogen production apparatus 12 of an offshore wind turbine arrangement 1 is described with reference to Fig. 6. The hydrogen production apparatus 12 is configured for producing hydrogen gas 13 by means of electrical energy generated by wind power.

In a first step S1 of the method, a cooling liquid 22 is cooled by a subsea heat exchanger 21.

In a second step S2 of the method, the cooling liquid 22 is guided from the subsea heat exchanger 21 to the hydrogen production apparatus 12 and back through a closed loop 25 formed by a pipe arrangement 23.

Although the method has been described based on using the cooling system 20 shown in Fig. 1, the method can also be carried out by means of one of the other cooling systems 120, 220, 320, 420 described herein (Figs. 2 bis 4).

Although the present invention has been described in accordance with preferred embodiments, it is obvious for the person skilled in the art that modifications are possible in all embodiments.

## Claims

1. An offshore wind turbine arrangement (1), comprising
a wind turbine (2) for generating electrical energy by wind power,
a hydrogen production apparatus (12) for producing hydrogen gas (13) by means of the generated electrical energy, and
a cooling system (20) for cooling the hydrogen production apparatus (12),
wherein the cooling system (20) includes a subsea heat exchanger (21) for cooling a cooling liquid (22), and a pipe arrangement (23) forming a closed loop (25) for guiding the cooling liquid (22) from the subsea heat exchanger (21) to the hydrogen production apparatus (12) and back.

2. The offshore wind turbine arrangement according to claim 1, wherein
the subsea heat exchanger (21) and the hydrogen production apparatus (12) each comprises an inlet (26, 28) and an outlet (27, 29) for the cooling liquid (22), and
the pipe arrangement (23) forms the closed loop (25) by fluidly connecting the outlet (27) of the subsea heat exchanger (21) and the inlet (28) of the hydrogen production apparatus (12), and by fluidly connecting the outlet (29) of the hydrogen production apparatus (12) and the inlet (26) of the subsea heat exchanger (21).

3. The offshore wind turbine arrangement according to claim 1 or 2, wherein the subsea heat exchanger (21) is arranged below sea level (11) and/or on a seabed (10).

4. The offshore wind turbine arrangement according to one of claims 1 - 3, wherein the subsea heat exchanger (221) is arranged floatingly in the seawater (18) and/or the subsea heat exchanger (21) is anchored to the seabed (10) by means of one or more anchors (35).

5. The offshore wind turbine arrangement according to one of claims 1 - 4, wherein the cooling system (120) comprises one or more bouy (33) attached to the subsea heat exchanger (121) for indicating a location of the subsea heat exchanger (121) and/or for lifting the subsea heat exchanger (121) out of the seawater (18) for maintenance.

6. The offshore wind turbine arrangement according to one of claims 1 - 5, wherein the wind turbine (2) comprises a tower (8) and a platform (16) arranged outside the tower (8), and wherein the hydrogen production apparatus (12) is arranged on the platform (16).

7. The offshore wind turbine arrangement according to one of claims 1 - 6, wherein the wind turbine (302) comprises a tower (308) and a nacelle (307) arranged at the upper end of the tower (308), and wherein the hydrogen production apparatus (312) is arranged in the nacelle (307).

8. The offshore wind turbine arrangement according to claim 7, wherein
the cooling system (420) is configured for cooling one or more further heat producing units (406) arranged in the nacelle (407), and/or
an outlet (27) of the subsea heat exchanger (21) is fluidly connected to a fluid inlet (37) of the one or more further heat producing units (406), and an inlet (26) of the subsea heat exchanger (21) is fluidly connected to a fluid outlet (38) of the one or more further heat producing units (406), respectively.

9. The offshore wind turbine arrangement according to one of claims 1 - 8, wherein the cooling system (120) includes one or more pumps (P2) for pumping the cooling liquid (22) through the closed loop (125) of the pipe arrangement (123).

10. The offshore wind turbine arrangement according to one of claims 1 - 9, comprising a water supply system (17) for supplying seawater (18) to the hydrogen production apparatus (12) for converting the seawater 18 by means of electrical energy to hydrogen gas (13), the water supply system (17) comprising a further pipe arrangement (19) separate from the pipe arrangement (23) of the cooling system.

11. A method for cooling a hydrogen production apparatus (12) of an offshore wind turbine arrangement (1), the hydrogen production apparatus (12) being configured for producing hydrogen gas (13) by means of electrical energy generated by wind power, the method comprising the steps:
a) cooling (S1) a cooling liquid (22) by a subsea heat exchanger (21), and
b) guiding (S2) the cooling liquid (22) from the subsea heat exchanger (21) to the hydrogen production apparatus (12) and back through a closed loop (25) formed by a pipe arrangement (23).
